# EUROPEAN PATENT APPLICATION

(11) **EP 3 354 960 A1**
(43) Date of publication of application: **01.08.2018**
(21) Application number: 18152714.4
(22) Date of filing: 22.01.2018
(51) Int. Cl.: F16M 11/04, F16M 11/02, G09F 9/302, F16M 13/02

(54) **PANTOGRAPH BRACKET STRUCTURE FOR SUPPORTING SCREENS AND THE LIKE**

(30) Priority: 26.01.2017 IT 201700008490
(71) Applicant: P.M.Q. S.r.l., 20094 Corsico (MI) (IT)
(72) Inventor: VALLA, Guido, 20094 Corsico (MI) (IT)
(74) Representative: Rastelli, Franco

(57) **Abstract**

A pantograph bracket structure, for supporting screens and the like, comprises a movable portion (102) associated with a fixed portion (103) by means of a pantograph system; the movable portion (102) defines, with respect to the fixed portion (103), at least two functional positions: one closed position, in which the movable portion (102) is substantially adjacent to the fixed portion (103), and an open position, in which the movable portion (102) is spaced from the fixed portion (103); the fixed portion (103) is adapted to be rigidly associated with a wall or other fixed support and the movable portion (102) is adapted to support a screen (104); the bracket structure (101) is characterized in that it comprises temporary locking means, adapted to hold the movable portion (102) in the closed position, and at least one tilting element (106) hinged to the fixed portion (103) and to the movable portion (102); the tilting element (106) comprises operation means (108) accessible from the outside by an operator, without any interference with the screen (104), to bring the movable portion (102) from the closed position to the open position.

## Description

### BACKGROUND TO THE INVENTION

The present invention concerns a pantograph bracket structure for supporting screens and the like.

More specifically, the present invention refers to a pantograph bracket structure for mounting a screen in a video wall system consisting of a plurality of screens arranged seamlessly side by side.

It is known to use pantograph mounting brackets for supporting screens so that the screens can be rapidly removed if necessary.

For said purpose, pantograph mounting brackets are known which are provided with a push-pull opening and closing system for the single screen to be removed.

Although it operates well, the rapid removal system described above could be improved.

In fact, operation of the push-pull pantograph mounting brackets currently on the market entails a pressure action on the screen to open the pantograph release mechanism.

If the operator performs the above action too vigorously, it can result in breakage of the screen.

This problem has become even more important since the latest screens are much thinner and more delicate compared to the screens produced previously.

### SUMMARY OF THE INVENTION

The aim of the present invention is to provide a pantograph bracket structure that overcomes the drawbacks of the prior art cited above.

Within this aim, one object of the invention is to provide a pantograph bracket structure which allows rapid removal of the screen without the need to press on said screen.

A further object of the invention is to provide a pantograph bracket structure equipped with a lock which can be easily released.

A further object of the invention is to provide a pantograph bracket structure which allows micrometric adjustment of the screen position.

A further object of the present invention is to provide a structure which, due to its specific construction characteristics, is able to ensure the broadest guarantees of reliability and safety during use.

These and further objects, which will become clearer below, are achieved by a pantograph bracket structure for supporting screens and the like, comprising a movable portion associated with a fixed portion by means of a pantograph system; said movable portion defining, with respect to said fixed portion, at least two functional positions: a closed position, in which said movable portion is substantially adjacent to said fixed portion, and an open position, in which said movable portion is spaced from said fixed portion; said fixed portion being adapted to be rigidly associated with a wall or other fixed support, said movable portion being adapted to support a screen; said bracket structure being characterized in that it comprises temporary locking means, adapted to hold said movable portion in the closed position, and at least one tilting element hinged to said fixed portion and to said movable portion; said tilting element comprising operation means accessible from the outside by an operator to bring said movable portion from said closed position to said open position.

### BRIEF DESCRIPTION OF THE DRAWINGS

Further characteristics and advantages of the present invention will become clearer from an examination of the description of a preferred but not exclusive embodiment of the invention, illustrated by way of non-limiting example in the accompanying drawings, in which:
Figure 1 is a perspective view showing the pantograph bracket structure according to the present invention;
Figure 2 is a front elevation view of the pantograph bracket structure;
Figure 3 is a lateral elevation view showing the structure in operating conditions, in the closed position;
Figure 4 is a view similar to the preceding one showing the structure in the open condition;
Figure 5 is a plan view of the structure, in the closed position;
Figure 6 is a front elevation view of the pantograph bracket structure, according to a further aspect of the invention;
Figure 7 is a lateral elevation view showing the structure of the preceding figure in operating conditions, in the closed position;
Figure 8 is a view similar to the preceding one showing the structure in the open condition;
Figure 9 is a plan view showing the structure of the preceding figure in the closed position;
Figure 10 is a perspective view of the structure of the preceding figure, shown in the closed position;
Figure 11 is a front view of the structure, according to a further aspect of the invention, provided with an accessory for vertical screen mounting;
Figure 12 is a lateral view of the structure of the preceding figure, shown in the closed position;
Figure 13 is a view similar to the preceding one showing the structure in the open condition;
Figure 14 is a plan view showing the structure of the preceding figure in the closed position;
Figure 15 is a perspective view of the structure of the preceding figure, shown in the closed position.

### DESCRIPTION OF PREFERRED EMBODIMENTS

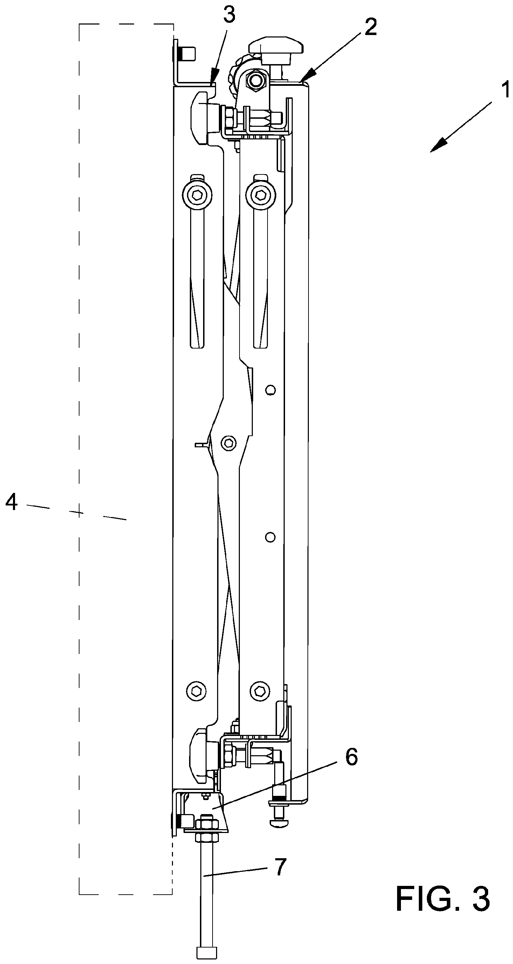

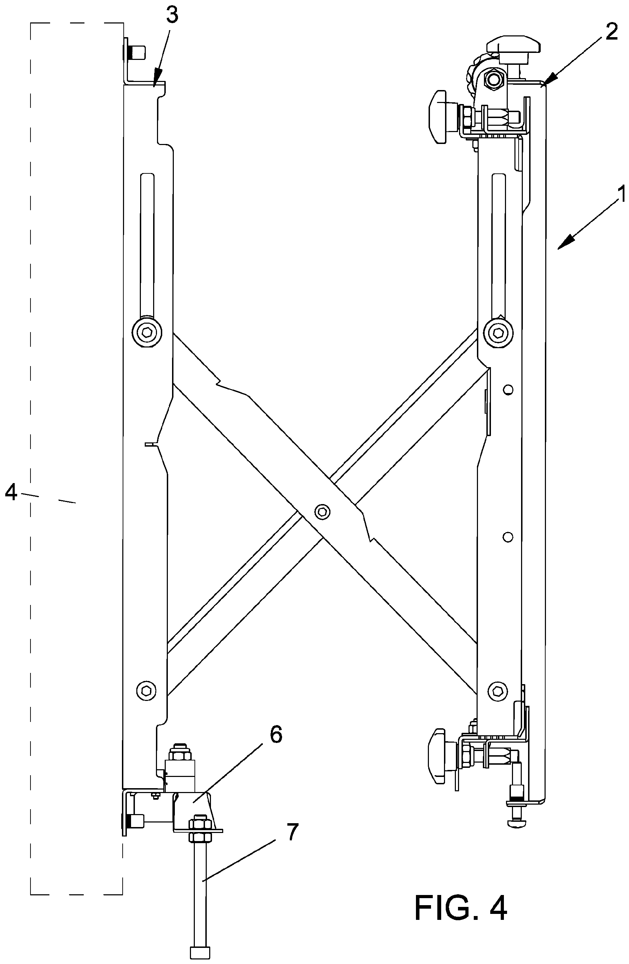

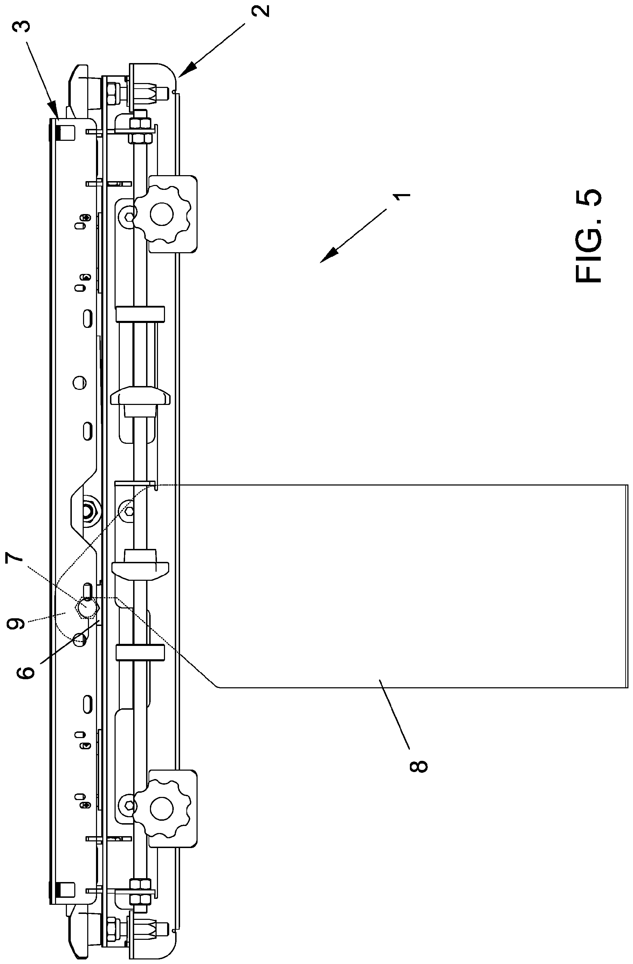

With particular reference to the numeric symbols of the above-mentioned figures, the pantograph bracket structure, according to the present invention, indicated as a whole by the reference number 1, comprises a movable portion 2 associated with a fixed portion 3 by means of a pantograph system so that the movable portion 2 defines, with respect to the fixed portion 3, at least two functional positions: one closed position, as can be seen in Figures 3 and 5, in which the movable portion 2 is substantially adjacent to the fixed portion 3, and an open position, as can be seen in Figure 4, in which the movable portion 2 is spaced from the fixed portion 3.

The fixed portion 3 can be rigidly associated with a wall or other fixed support while the movable portion 2 is adapted to support a screen 4.

According to the present invention, the bracket structure 1 comprises temporary locking means adapted to hold the movable portion 2 in the closed position and at least one tilting element 6 hinged to the fixed portion 3 and to the movable portion 2.

The temporary locking means advantageously consist of one or more permanent magnets.

The tilting element 6 comprises a pin 7 which can be engaged by a key element 8 to allow an operator to pull the tilting element 6 and therefore the movable portion 2 outwards, thus overcoming the attraction force of the magnet locking means on said movable portion 2.

The key element 8 consists of a plate with sufficiently reduced thickness to allow insertion thereof between the slit existing between two adjacent screens and has a hook portion 9 adapted to engage the pin 7, which consists of a screw of suitable length fixed in an adjustable manner to the tilting element 6.

The tilting element 6 consists of a shaped plate which rotates around a fulcrum 10 with respect to the fixed portion 3.

As described above, the bracket structure is opened by inserting the key 8 into the slit existing between two adjacent screens and engaging the screw 7 by means of the hook portion 9 of said key.

At this point, it is sufficient to pull the key 8 until the magnets are released.

To close again the structure, it is sufficient to exert a slight pressure on the outer edges of the screen 4 until the movable portion 2 is brought within the area of action of the magnets.

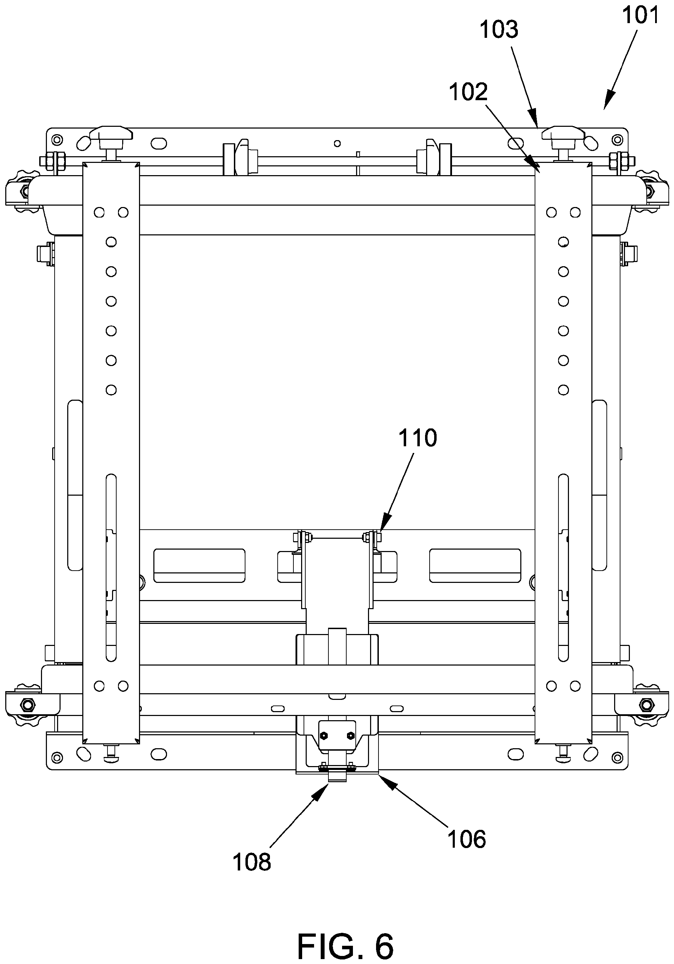

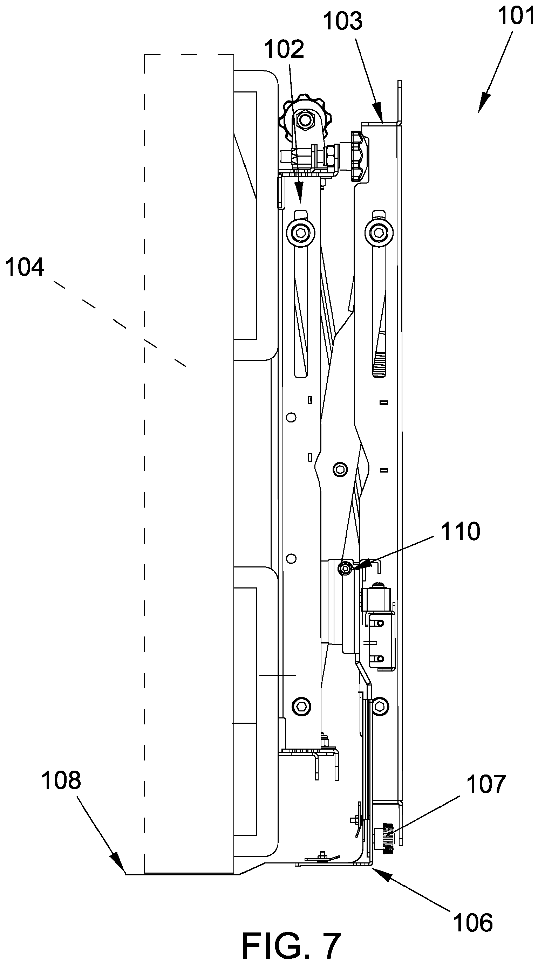

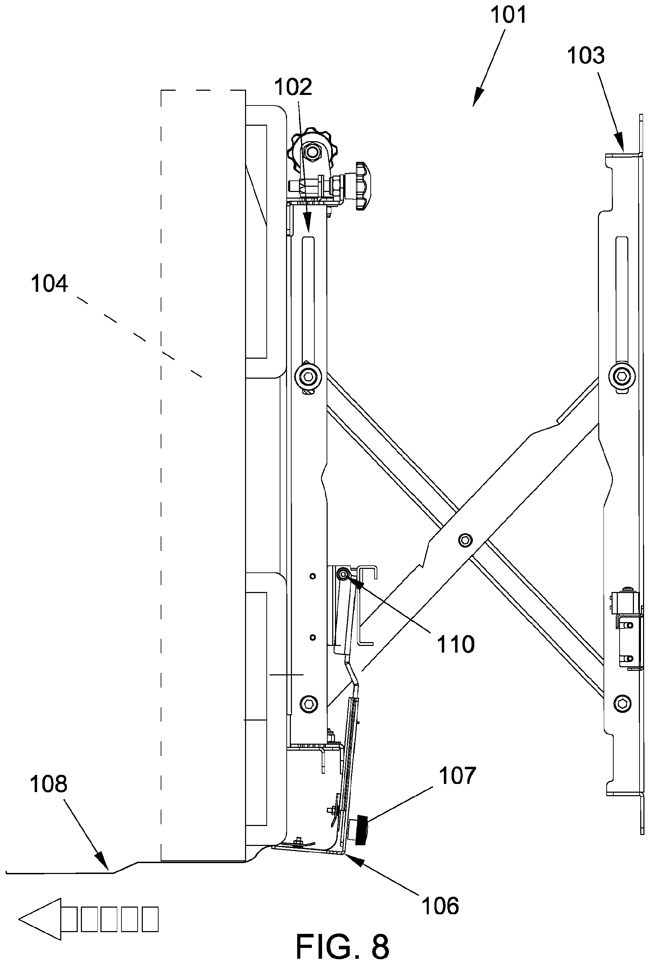

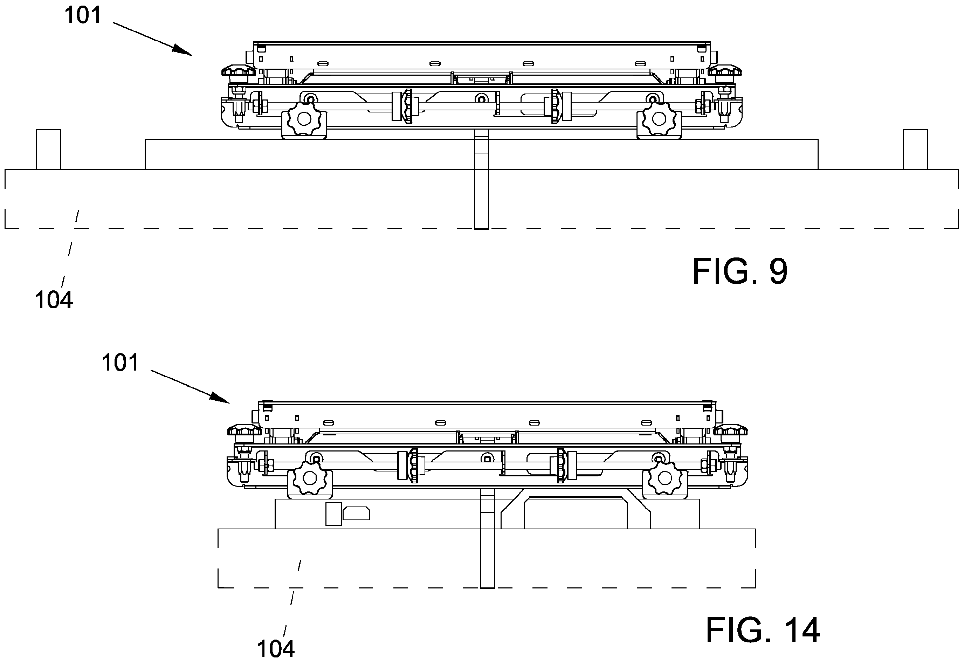

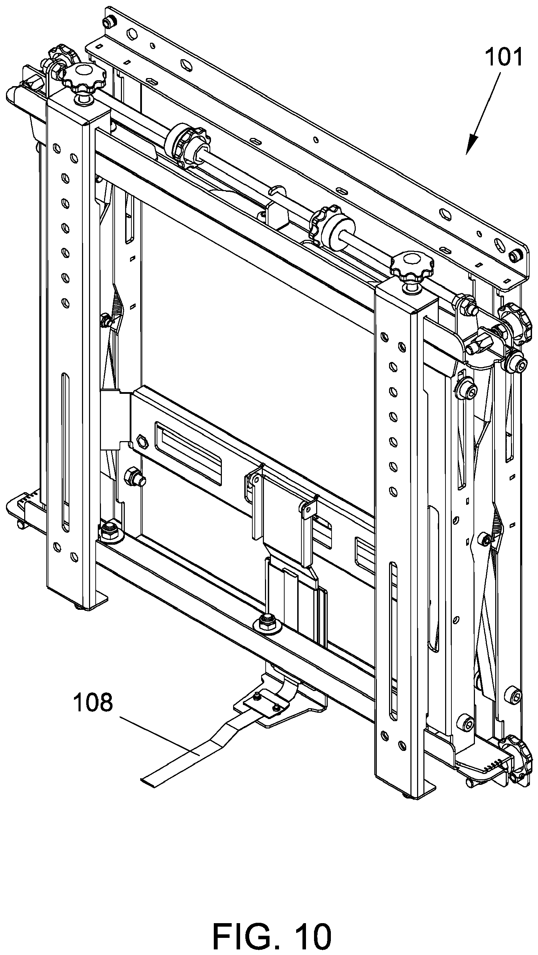

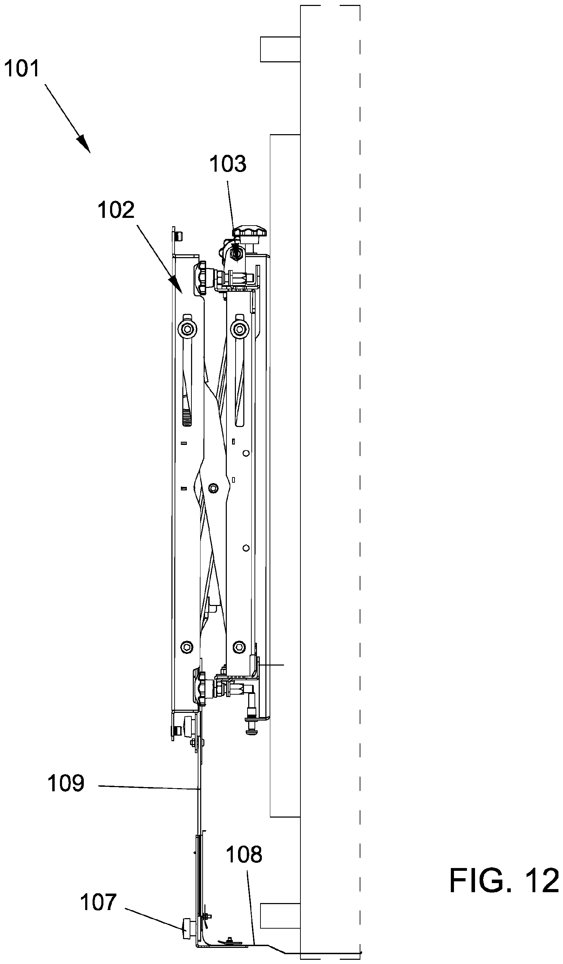

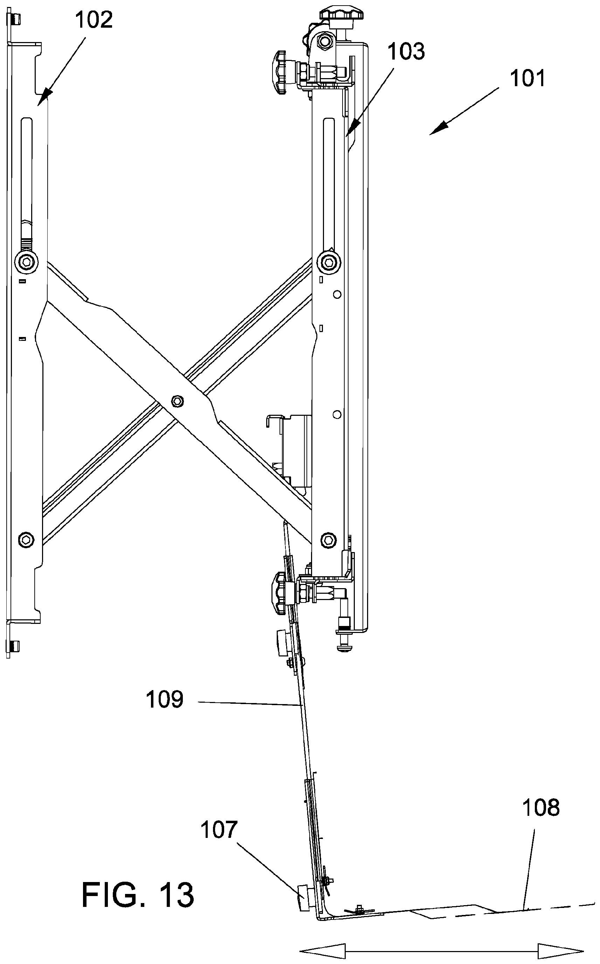

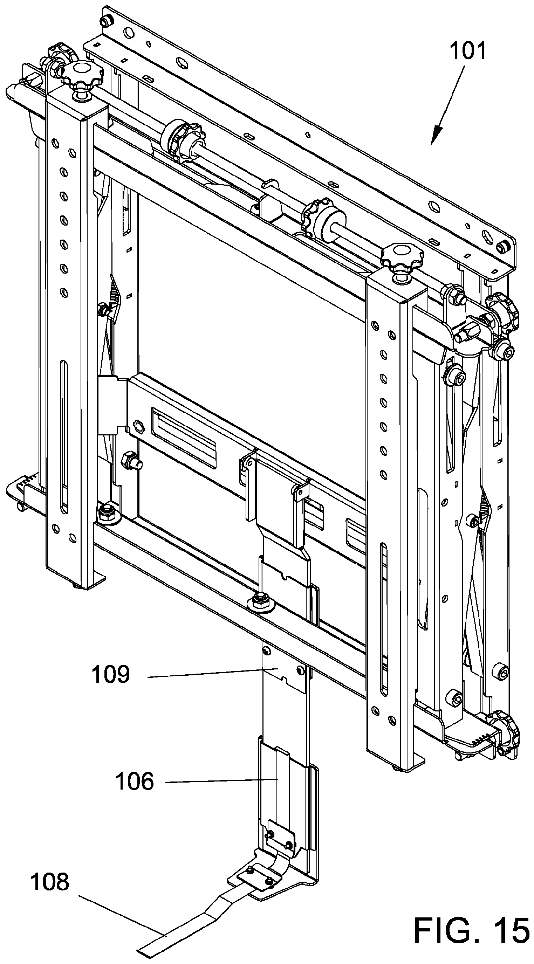

Figures 6-15 show a pantograph bracket structure, according to a further aspect of the invention, indicated as a whole by the reference number 101, which comprises a movable portion 102 associated with a fixed portion 103 by means of a pantograph system so that the movable portion 102 defines, with respect to the fixed portion 103, at least two functional positions: a closed position, as can be seen in Figures 7, 9, 10, 12, 14 and 15, in which the movable portion 102 is substantially adjacent to the fixed portion 103, and an open position, as can be seen in Figures 8 and 13, in which the movable portion 102 is spaced from the fixed portion 103.

The fixed portion 103 can be rigidly associated with a wall or other fixed support while the movable portion 102 is adapted to support a screen 104.

According to the present invention, the bracket structure 101 comprises temporary locking means adapted to hold the movable portion 102 in the closed position and at least one tilting element 106 hinged to the fixed portion 103 and to the movable portion 102.

The temporary locking means advantageously consist of one or more permanent magnets.

The tilting element 106 consists of a shaped plate which rotates around a fulcrum 110 with respect to the fixed portion 103.

The tilting element 6 is operated by means of a flexible and extractable tongue 108, which remains always connected to the tilting element 106.

The tongue 108 is advantageously made of harmonic steel, a very thin material similar to the material traditionally used for flexible tape measures.

To facilitate extraction, a very small appendage is provided which can be engaged with the nail of a hand or with a card like a credit card.

Once the tongue has been extracted by 1-2 cm, it is firmly gripped with the fingers and, by pulling, the tilting element opens, with a movement analogous to the embodiment described above.

The tilting element 106 can be height-adjusted by a small handwheel 107 in order to adapt it to the majority of screens used on the market for the construction of video walls, i.e. screens ranging from 46" to 55".

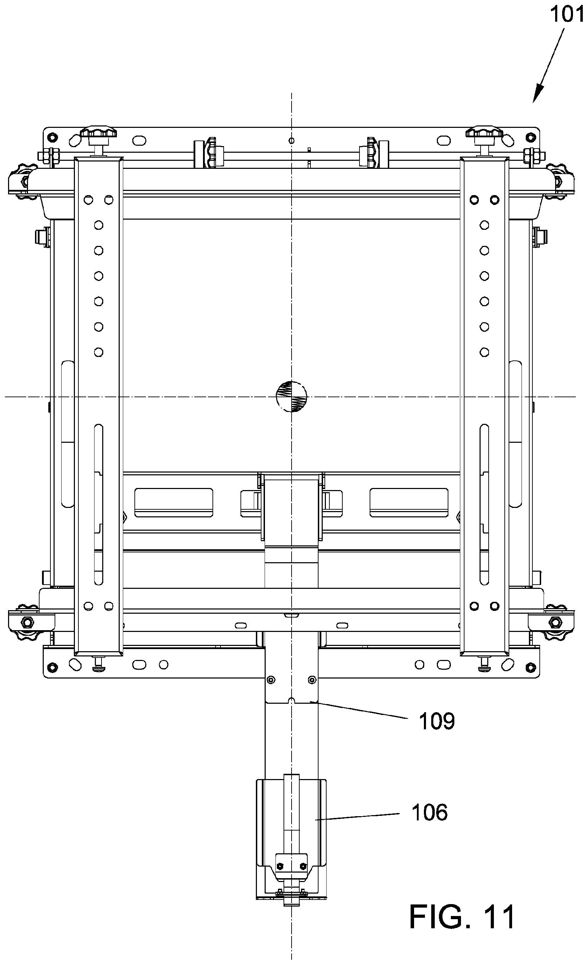

Figures 11-15 show an embodiment of the structure in which an optional element 109 has been added, i.e. an "extension" which allows the tilting element to be elongated for mounting screens in a vertical position (portrait).

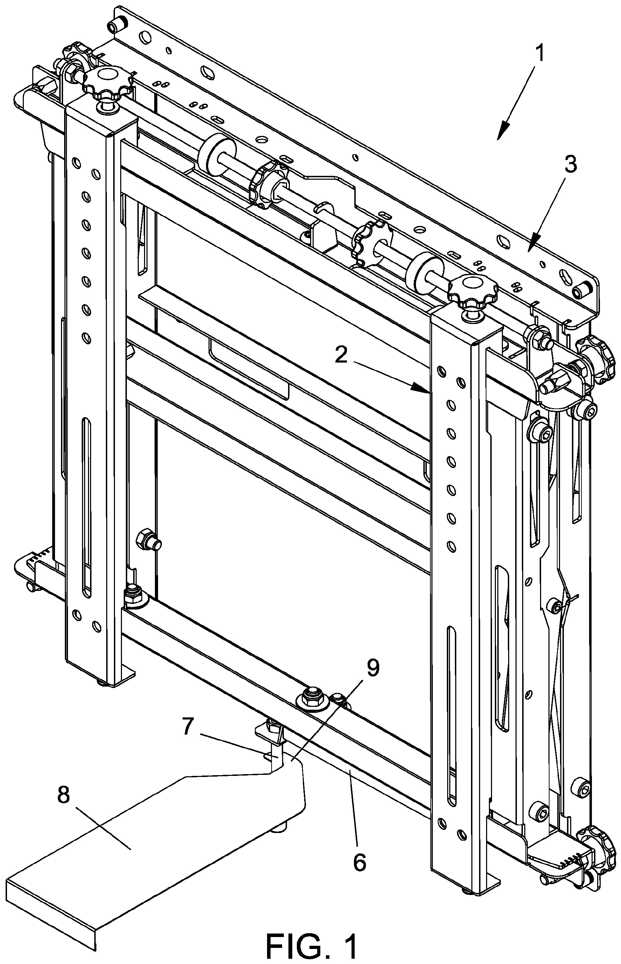

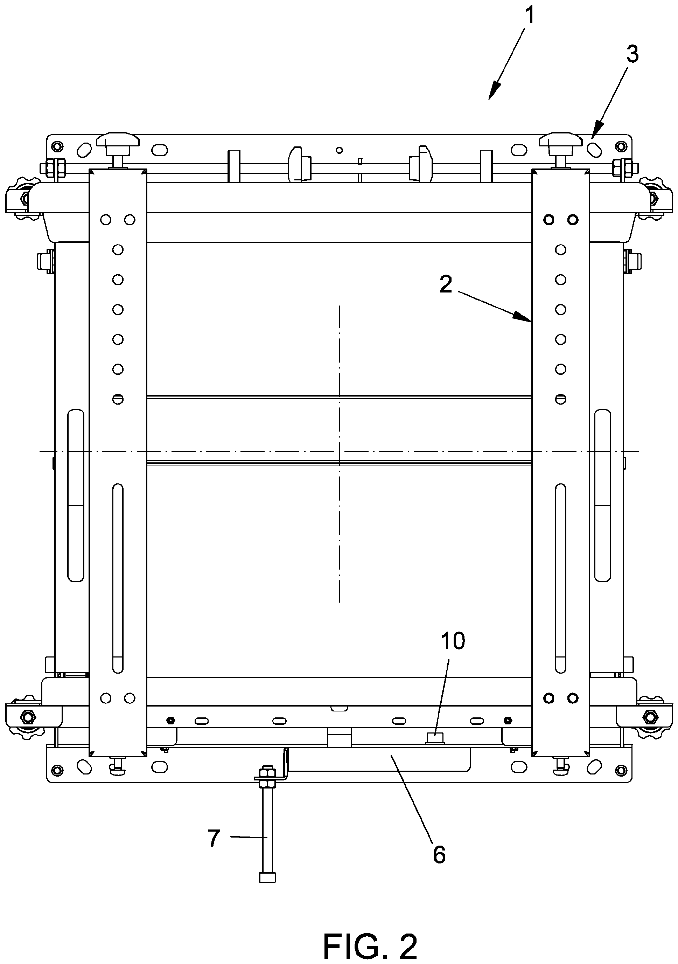

The embodiment shown in Figures 6-15 has the advantage, compared to the embodiment shown in Figures 1-5, of avoiding the use of the key element 8, separate from the tilting element 6.

Elimination of the key element 8 and the pin 7 facilitates mounting of the screen to the structure.

Another possible drawback solved by the embodiment illustrated in figures 6-15 is the possible loss of the key element.

A further drawback solved by the embodiment shown in Figures 6-15 consists in the lesser practicality of the key element 8 which must be inserted and manoeuvred with care.

In fact, it should be considered that very often the mounting is carried out in uncomfortable places and at uncomfortable heights, therefore the key element may not be practical, in addition to the fact that the operator may lose it with all the ensuing negative consequences.

The tongue 108 is extremely simple and easy to use.

In practice it has been found that the present invention achieves the intended aim and objects.

In fact, a pantograph bracket structure has been provided, particularly designed to support a screen forming part of a video wall system, which allows the screen to be easily removed.

In particular, the structure of the present invention allows complete removal of the screen while avoiding manual contact with the screen and therefore eliminating the risk of breakage.

The screen locking and release system is furthermore reliable and safe.

Of course the materials used and the sizes can be any, according to requirements.

## Claims

1. A pantograph bracket structure, for the support of screens and the like, comprising a movable portion (2, 102) associated with a fixed portion (3, 103) by means of a pantograph system; said movable portion (2, 102) defining, with respect to said fixed portion (3, 103), at least two functional positions: a closed position, in which said movable portion (2, 102) is substantially adjacent to said fixed portion (3, 103), and an open position, in which said movable portion (2, 102) is spaced from said fixed portion (3, 103); said fixed portion (3, 103) being adapted to be rigidly associated with a wall or other fixed support, said movable portion (2, 102) being adapted to support a screen (4, 104); said bracket structure (1, 101) being **characterized in that** it comprises temporary locking means, adapted to hold said movable portion (2, 102) in the closed position, and at least one tilting element (6, 106) hinged to said fixed portion (3, 103) and to said movable portion (2, 102); said tilting element (6, 106) comprising operation means (8, 108) accessible from the outside by an operator to bring said movable portion (2, 102) from said closed position to said open position.

2. A pantograph bracket structure, according to claim 1, **characterized in that** said tilting element (6, 106) consists of a shaped plate which rotates around a fulcrum (10, 110) with respect to said fixed portion (3, 103).

3. A pantograph bracket structure, according to claim 1, **characterized in that** said temporary locking means comprise magnetic means.

4. A pantograph bracket structure, according to claim 3, **characterized in that** said temporary locking means comprise at least one magnet associated with said fixed portion (3, 103).

5. A pantograph bracket structure, according to claim 1, **characterized in that** said operation means comprise a pin (7) and a key element (8) having a hook portion (9) adapted to engage said pin (7); said key element (8) consisting of a plate with sufficiently reduced thickness to allow the insertion thereof between the slit existing between two adjacent screens (4) each associated with a respective movable portion (2) of two adjacent bracket structures (1); said pin (8) consisting of a screw fixed in an adjustable manner to said tilting element (6).

6. A pantograph bracket structure, according to claim 1, **characterized in that** said operation means comprise a flexible tongue (108) connected to said tilting element (106); said flexible tongue (108) being extractable so that, by exerting a traction on said flexible tongue (108) said tilting element (106) is operated.

7. A pantograph bracket structure, according to claim 6, **characterized in that** said flexible tongue (108) is made of harmonic steel.

8. A pantograph bracket structure, according to claim 6, **characterized in that** said flexible tongue (108) comprises an appendage which can be engaged with the nail of a hand or also with an object such as a card or credit card.

9. A pantograph bracket structure, according to claim 6, **characterized in that** said tilting element (106) can be height-adjusted with a handwheel (107) to be adapted to the majority of screens used on the market.

10. A pantograph bracket structure, according to claim 6, **characterized in that** it comprises an extension element (109) which allows said tilting element (106) to be elongated for the mounting of screens (104) in a vertical position.
